# EUROPÄISCHE PATENTANMELDUNG

(11) **EP 1 176 790 A2**
(43) Veröffentlichungstag der Anmeldung: **30.01.2002**
(21) Anmeldenummer: 01250268.8
(22) Anmeldetag: 19.07.2001
(51) Int. Cl.: H04M 3/42

(54) **Herstellen einer Telefonverbindung mittels einer persönlicher Rufnummer und eines Terminkalenders**

(30) Priorität: 25.07.2000 DE 10036152
(71) Anmelder: SIEMENS AKTIENGESELLSCHAFT, 80333 München (DE)
(72) Erfinder: Aschir, Alexander, 13581 Berlin (DE)

(57) **Zusammenfassung**

Die Erfindung betrifft ein Verfahren und eine Anordnung zum Herstellen einer Kommunikationsverbindung zwischen einem Kommunikationssuchenden und einem Kommunikationspartner, dem eine persönliche Kommunikationsadresse zugeordnet ist.
Um in einfacher und ergonomischer Weise eine Zuordnung von individuellen Kennungen von Kommunikationsendgeräten (21) zu der persönlichen Kommunikationsadresse zu ermöglichen, wird zum Aufbau der Kommunikationsverbindung aus einem Terminspeicher (18) des Kommunikationspartners die Information ausgelesen, welche individuelle Kennung zu diesem Zeitpunkt der persönlichen Kommunikationsadresse des Kommunikationspartners zugeordnet ist.

## Beschreibung

Die Erfindung betrifft ein Verfahren zum Herstellen einer Kommunikationsverbindung zwischen einem Kommunikationssuchenden und einem Kommunikationspartner, dem eine persönliche Kommunikationsadresse zugeordnet ist, bei dem zur Kommunikationsaufnahme die persönliche Kommunikationsadresse des Kommunikationspartners angesprochen wird, der persönlichen Kommunikationsadresse tag- und zeitabhängig eine individuelle Kennung mindestens eines Kommunikationsendgerätes zugeordnet wird und eine Kommunikationsverbindung zu dem mindestens einen Kommunikationsendgerät mit der individuellen Kennung aufgebaut wird. Weiterhin betrifft die Erfindung eine Anordnung zur Durchführung des Verfahrens.

Ein derartiges Verfahren ist auf den Internetseiten mit den Internetadressen http://www.0700info.de/wwwww.html,
http://www.0700info.de/sp/gr-link.html und
http://www.0700info.de/sp/gr-text.html (von Niels Diemer)
beschrieben. Der Kommunikationspartner ermöglicht dabei bereits im Vorfeld des Verfahrens eine korrekte Zuordnung der individuellen Kennung zu seiner persönlichen Kommunikationsadresse, indem er tag- und zeitabhängig mindestens eine individuelle Kennung auswählt. Dabei wird jeweils die Kennung eines Kommunikationsendgerätes ausgewählt, über das der Kommunikationspartner am jeweiligen Tag und zu der jeweiligen Uhrzeit erreichbar ist, z.B. während der Arbeitszeit über das Festnetz-Telefon im Büro, nach Feierabend über sein Handy. Dieser Auswahlprozess wird in den oben genannten Internetseiten auch als Eingabe eines persönlichen Suchprofils bezeichnet und kann beispielsweise über das Internet, über eine Hot-line (Call-Center) oder über ein Telefon-Sprachmenü erfolgen. Weicht der Tagesablauf des Kommunikationspartners jedoch von dem dem eingegebenen persönlichen Suchprofil zugrundegelegten Tagesverlauf ab, so kann keine korrekte Zuordnung der individuellen Kennung zu der persönlichen Kommunikationsadresse des Kommunikationspartners erfolgen und demzufolge nicht die gewünschte Kommunikationsverbindung aufgebaut werden.

Der Erfindung liegt die Aufgabe zugrunde, ein Verfahren und eine Anordnung anzugeben, mit denen in einfacher und ergonomischer Weise eine Zuordnung von individuellen Kennungen von Kommunikationsendgeräten zu der persönlichen Kommunikationsadresse auch dann ermöglicht wird, wenn der aktuelle Tagesablauf des Kommunikationspartners von dem seinem Suchprofil zugrundegelegten Tagesablauf abweicht.

Diese Aufgabe wird bei einem Verfahren der eingangs angegebenen Art erfindungsgemäß dadurch gelöst, dass zum Aufbau der Kommunikationsverbindung aus einem Terminspeicher des Kommunikationspartners die Information ausgelesen wird, welche individuelle Kennung zu diesem Zeitpunkt der persönlichen Kommunikationsadresse des Kommunikationspartners zugeordnet ist und eine Kommunikationsverbindung zu dem Kommunikationsendgerät mit dieser individuellen Kennung hergestellt wird. Dabei ist insbesondere vorteilhaft, dass die Information, welche individuelle Kennung zu diesem Zeitpunkt der persönlichen Kommunikationsadresse des Kommunikationspartners zuzuordnen ist, aus einem Terminspeicher des Kommunikationspartners ausgelesen wird, in welchem die Termine des Kommunikationspartners gespeichert sind. Bei Kenntnis dieser Termine ist gleichzeitig der wahrscheinliche Aufenthaltsort des Kommunikationspartners bekannt, so dass der persönlichen Kommunikationsadresse des Kommunikationspartners die individuelle Kennung eines Kommunikationsendgerätes zugeordnet werden kann, welches sich an dem wahrscheinlichen Aufenthaltsort befindet bzw. für diesen Aufenthaltsort vorgesehen ist.

Das erfindungsgemäße Verfahren kann derart ausgestaltet sein, dass bei Nichtvorliegen der Information im Terminspeicher der persönlichen Kommunikationsadresse zeitabhängig die individuelle Kennung des mindestens einen Kommunikationsendgerätes zugeordnet wird. Dadurch kann auch dann eine Kommunikationsverbindung hergestellt werden, wenn in dem Terminspeicher keine Information (d.h. kein Termin) eingetragen ist; zum Herstellen der Kommunikationsverbindung wird dann zeitabhängig eine individuelle Kennung zugeordnet.

Das erfindungsgemäße Verfahren kann derart ausgestaltet sein, dass der persönlichen Kommunikationsadresse tag- und zeitabhängig in einer vorgewählten Reihenfolge die individuellen Kennungen mehrerer Kommunikationsendgeräte zugeordnet werden und bei einem Fehlschlagen des Herstellens der ersten Kommunikationsverbindung in der Reihenfolge der individuellen Kennungen das Herstellen von Kommunikationsverbindungen zu den Kommunikationsendgeräten mit diesen individuellen Kennungen versucht wird.
Dies hat insbesondere den Vorteil, dass der persönlichen Kommunikationsadresse des Kommunikationspartners mehrere individuelle Kennungen zugeordnet sind, so dass bei dem Fehlschlagen des Herstellens der ersten Kommunikationsverbindung zu der ersten individuellen Kennung weitere Versuche unternommen werden können, Kommunikationsverbindungen zu den individuellen Kennungen der Reihenfolge aufzubauen.

Das erfindungsgemäße Verfahren kann derart ausgestaltet sein, dass zum Aufbau der Kommunikationsverbindung aus einem Terminspeicher des Kommunikationspartners die Information ausgelesen wird, welcher Termin zu diesem Zeitpunkt für den Kommunikationspartner vorliegt, aus einem Adressspeicher des Kommunikationspartners mindestens eine dem Termin zugeordnete individuelle Kennung ausgelesen wird und eine Kommunikationsverbindung zu dem Kommunikationsendgerät mit dieser individuellen Kennung hergestellt wird.
Hierbei ist insbesondere vorteilhaft, dass zur Zuordnung der individuellen Kennung mit dem Terminspeicher und dem Adressspeicher universell nutzbare Speicher verwendet werden, die oftmals bereits für den Kommunikationspartner eingerichtet sind, wobei in dem Terminspeicher die Termine des Kommunikationspartners und in dem Adressspeicher von dem Kommunikationspartner benutzten Kommunikationsadressen (z.B. Telefonnummern oder E-Mail-Adressen von Bekannten des Kommunikationspartners) gespeichert sind. Bei dem Terminspeicher und dem Adressspeicher muss es sich nicht um zwei physikalisch getrennte Speicher handeln. Es ist ebenso möglich, dass die Termine und die Kommunikationsadressen in einem gemeinsamen Speicher gespeichert sind.

Das erfindungsgemäße Verfahren kann derart ausgestaltet sein, dass der Terminspeicher von einem Terminkalender-Programm verwaltet wird. Hierbei ist insbesondere vorteilhaft, dass heutzutage oftmals (insbesondere von Mitarbeitern in Unternehmen) zur Planung von Terminen Terminkalender-Programme verwendet werden, so dass für die Einrichtung und Verwendung von Terminkalender-Programmen kein zusätzlicher Aufwand erforderlich ist.

Das Verfahren kann auch derart ausgestaltet sein, dass der Terminspeicher von einem über ein Datenverarbeitungsgerät des Kommunikationspartners bedienbaren Terminkalender-Programm verwaltet wird. Hierbei ist insbesondere vorteilhaft, dass das Terminkalenderprogramm über das Datenverarbeitungsgerät direkt von dem Kommunikationspartners bedienbar ist und somit zur Bedienung des Programms keine zusätzliche Bedienstelle notwendig ist.

Das erfindungsgemäße Verfahren kann auch derart ausgestaltet sein, dass das Terminkalender-Programm auf einem Rechner betrieben wird, der außerhalb eines Kommunikationsnetzes angeordnet ist, durch das der Kommunikationssuchende und der Kommunikationspartner verbindbar sind. Hierbei ist insbesondere vorteilhaft, dass für das Betreiben des Terminkalenderprogramms kein Zugriff auf das Kommunikationsnetz notwendig ist und somit das Terminkalenderprogramm auch von Dienstanbietern, die nicht das Kommunikationsnetz betreiben, betreibbar ist.

Beim erfindungsgemäßen Verfahren kann der Rechner und das Kommunikationsnetz über eine nach den Spezifikationen der Parlay-Gruppe betriebene Schnittstelle verbunden werden. Durch die Verbindung von Rechner und Kommunikationsnetz über die nach den Spezifikationen der Parlay-Gruppe betriebene Schnittstellen (auch Parlay-Gateway genannt) besteht eine besonders einfach anwendbare Lösung zur Verbindung, da bereits anwendbare Parlay-Gateways existieren. Nähere Informationen zu den Spezifikationen der Parlay-Gruppe sind im Internet unter der Internetadresse www.parlay.org erhältlich.

Beim erfindungsgemäßen Verfahren kann auch ein Kommunikationsnetz verwendet werden, das eine Struktur eines intelligenten Netzes (IN) aufweist. Ein Kommunikationsnetz mit der Struktur eines intelligenten Netzes eignet sich besonders gut zur Anwendung des erfindungsgemäßen Verfahrens, da durch ein solches Kommunikationsnetz besonders einfach das Ansprechen der persönlichen Kommunikationsadresse des Kommunikations-partners erkannt werden kann.

Die obengenannte Aufgabe wird ebenfalls erfindungsgemäß gelöst durch eine Anordnung zur Durchführung des oben dargestellten Verfahrens, die einen mit einem Kommunikationsnetz verbindbaren Terminspeicher aufweist, in dem Informationen abgespeichert sind, welche individuellen Kennungen von Kommunikationsendgeräten der persönlichen Kommunikationsadresse des Kommunikationspartners zugeordnet sind.

Die erfindungsgemäße Anordnung kann derart ausgestaltet sein, dass in dem Terminspeicher für den Kommunikationspartner vorliegende Termine abgespeichert sind und in einem Adressspeicher der Anordnung den Terminen zuordenbare individuelle Kennungen von Kommunikationsendgeräten abgespeichert sind.

Zur weiteren Erläuterung der Erfindung ist
in Figur 1 eine schematische Darstellung eines Ausführungsbeispiels einer Terminansicht des Kommunikationspartners und
in Figur 2 eine schematische Darstellung eines Ausführungsbeispiels einer Anordnung zur Ausführung des erfindungsgemäßen Verfahrens dargestellt.

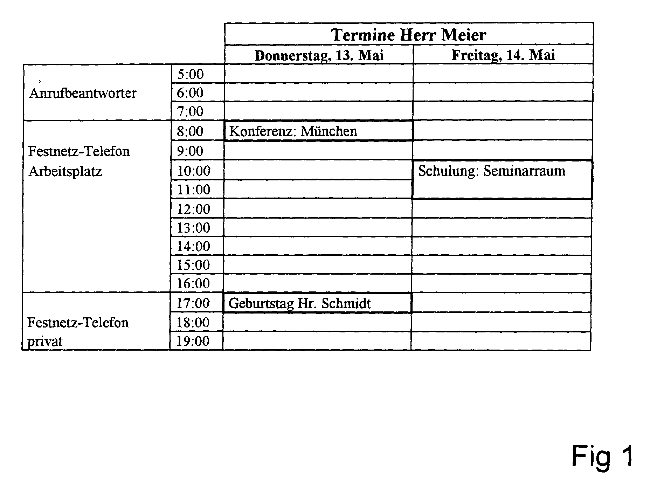

In Figur 1 ist eine schematische Darstellung eines Ausführungsbeispiels einer Terminansicht des Kommunikationspartners gezeigt, wie sie beispielsweise auf einem Datenverarbeitungs- gerät dargestellt werden kann, mit dem ein Terminkalenderprogramm zur Verwaltung eines Terminspeichers bedient wird. Auf der rechten Seite der Figur 1 sind beispielhaft die Tage Donnerstag, der 13. Mai und Freitag, der 14. Mai als Ausschnitt des Terminkalenders des Kommunikationspartners dargestellt. Es handelt sich hierbei um den Terminkalender von einem Herr Meier, der in diesem Beispiel als Kommunikationspartner dient, zu dem also durch Ansprechen seiner persönlichen Kommunikationsadresse eine Kommunikationsverbindung aufgebaut werden soll. Linksseitig an die Terminplanung für den Donnerstag anschließend ist eine vertikale Zeitachse dargestellt, auf der die Zeiten von 5.00 Uhr morgens bis 20.00 Uhr abends aufgetragen sind. Auf der linken Seite der Figur 1 dargestellt sind die vorgewählten Ziele, zu denen tag- und zeitabhängig Kommunikationsverbindungen aufgebaut werden sollen, wenn die persönliche Kommunikationsadresse des Kommunikationspartners angesprochen wird und wenn keine Termine zu dem betreffenden Zeitpunkt vorliegen. Beispielsweise soll sowohl am Donnerstag als auch am Freitag bei Ansprechen der persönlichen Kommunikationsadresse des Kommunikationspartners zwischen 5.00 Uhr und 8.00 Uhr eine Kommunikationsverbindung zu einem Kommunikationsendgerät in Form eines Anrufbeantworters aufgebaut werden. Zwischen 8.00 Uhr und 17.00 Uhr soll bei Ansprechen der persönlichen Kommunikationsadresse eine Kommunikationsverbindung zu dem am Arbeitsplatz des Kommunikationspartners befindlichen Kommunikationsendgerät (hier: zum Festnetz-Telefon am Arbeitsplatz von Herrn Meier) aufgebaut werden und zwischen 17.00 Uhr und 20.00 Uhr soll die Telekommunikationsverbindung zu dem privaten Festnetz-Telefon in Herrn Meiers Privathaushalt aufgebaut werden. Diese 3 vorgewählten Ziele werden standardmäßig immer dann verwendet, wenn in der rechten Seite in der Figur 1 keine Termine eingetragen sind. Sind jedoch in der rechten Seite Termine eingetragen, so werden diese Termine bei der Bestimmung des Kommunikationsendgerätes, zu dem eine Kommunikationsverbindung aufgebaut werden soll, herangezogen.

Wird beispielsweise am Donnerstag, dem 13. Mai um 8.30 Uhr die persönliche Kommunikationsadresse vom Kommunikationspartner Herrn Meier angesprochen, so soll eine Kommunikationsverbindung zu dem Kommunikationsendgerät Anrufbeantworter aufgebaut werden, da der Kommunikationspartner zu diesem Zeitpunkt an einer Konferenz teilnimmt und nicht gestört werden möchte. Die Information, dass Herr Meier bei Vorliegen eines Konferenz-Termins nicht gestört werden möchte und daher eine Kommunikationsverbindung zu dem Anrufbeantworter aufgebaut werden soll, wurde von Hr. Meier unabhängig von dem konkreten Termin in den Terminspeicher eingegeben. Der Kommunikationspartner kann verschiedene Regeln z.B. in den Terminspeicher eingeben, wie bei Vorliegen von Terminen zu verfahren ist.
Beispiele für Regeln:
- Ist eine Konferenz im Terminspeicher eingetragen, so soll die Kommunikationsverbindung zu dem Kommunikationsendgerät Anrufbeantworter aufgebaut werden.
- Ist ein Termin bei Privatpersonen im Terminspeicher eingetragen, so soll die Kommunikationsverbindung zu dem Festnetz-Telefon dieser Privatperson aufgebaut werden.
- Sind diese Privatpersonen nicht über ihr Festnetz-Telefon erreichbar, so soll die Kommunikationsverbindung zum Mobil-Kommunikationsendgerät dieser Privatpersonen (wenn vorhanden) aufgebaut werden.
Derartige Regeln können z.B. individuell für ausgewählte Termine oder global für alle Termine des Kommunikations-partners z.B. in dem Terminspeicher abgelegt werden.

Entsprechend der ersten oben genannten Regel wird hier der persönlichen Kommunikationsadresse also die individuelle Kennung des Anrufbeantworters (hier die Telefonnummer des Anrufbeantworters) zugeordnet und eine Kommunikationsverbindung zu dem Anrufbeantworter aufgebaut. Wird jedoch am Freitag um 8.30 Uhr Herrn Meiers persönliche Kommunikationsadresse angesprochen, so wird dieser persönlichen Kommunikationsadresse die individuelle Kennung des sich an Herrn Meiers Arbeitsplatz befindenden Kommunikationsendgerätes (hier: seines Festnetz-Telefons) zugeordnet und eine Kommunikationsverbindung zu diesem Festnetz-Telefon aufgebaut. Dies ist der Fall, weil am Freitag um 8.30 Uhr kein Termin vorliegt und somit das voreingestellte Ziel "Festnetz-Telefon Arbeitsplatz" (vergleiche linke Seite Figur 1) zum Aufbau der Kommunikationsverbindung verwendet wird.

Wird dagegen am Donnerstag um 17.30 Uhr die persönliche Kommunikationsadresse des Kommunikationspartners angesprochen so liegt zu diesem Zeitpunkt ein Termin vor: Der Kommunikationspartner befindet sich auf der Geburtstagsfeier von Herrn Schmidt, demzufolge soll eine Kommunikationsverbindung zu einem Kommunikationsendgerät, welches sich bei Herrn Schmidt befindet, hergestellt werden. Also wird der persönlichen Kommunikationsadresse von Herrn Meier die individuelle Kennung des Festnetz-Telefons von Herrn Schmidt zugeordnet und eine Kommunikationsverbindung zu diesem Festnetz-Kommunikationsendgerät aufgebaut. Sollte keine Kommunikationsverbindung zustande kommen, so wird in einem zweiten Schritt der persönlichen Kommunikationsadresse von Herrn Meier die individuelle Kennung des Mobilkommunikationsendgerätes von Herrn Schmidt (d.h. die MSISDN seines Handies) zugeordnet und eine Kommunikationsverbindung zu diesem Mobilkommunikationsendgerät hergestellt. Die Information, dass bei Vorliegen eines Termins bei Herrn Schmidt zuerst eine Kommunikationsverbindung zu dessen Festnetz-Telefon und - wenn eine Kommunikationsverbindung nicht erfolgreich aufgebaut werden kann - danach eine Kommunikationsverbindung zu Herrn Schmidts Mobiltelefon aufgebaut wird (vgl. die oben angeführte zweite und dritte Regel), kann wiederum unabhängig vom Termin als Regel im Terminspeicher abgelegt sein.

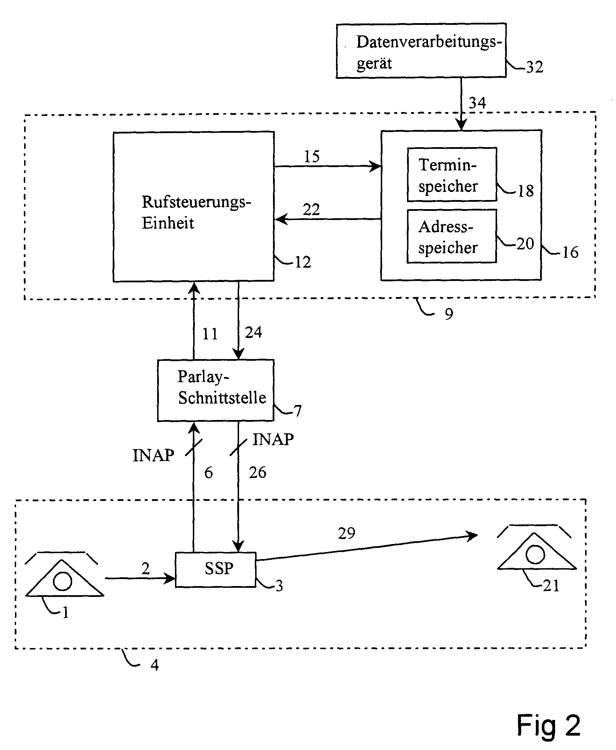

In Figur 2 ist ein Ausführungsbeispiel einer Anordnung zur Ausführung des erfindungsgemäßen Verfahrens und gleichzeitig ein Ausführungsbeispiel des erfindungsgemäßen Verfahrens dargestellt. An einem Kommunikationsendgerät 1 eines Kommunikationssuchenden wird zur Kommunikationsaufnahme die persönliche Kommunikationsadresse eines Kommunikationspartners angesprochen. Daraufhin wird eine Nachricht 2 an einen Dienstevermittlungspunkt 3 eines Kommunikationsnetzes 4 geschickt. In diesem Beispiel handelt es sich beim Kommunikationsnetz um ein Telekommunikationsnetz. Der Dienstevermittlungspunkt 3 wird auch Service Switching Point (SSP) genannt und bildet einen Teil des in der Struktur eines Intelligenten Netzes (IN) aufgebauten Kommunikationsnetzes 4. Mit der Nachricht 2 wird unter anderem die persönliche Kommunikationsadresse des Kommunikationspartners an den Dienstevermittlungspunkt 3 übertragen. Der Dienstevermittlungspunkt 3 erkennt anhand der persönlichen Kommunikationsadresse, dass dieser Kommunikationsadresse eine individuelle Kennung eines Kommunikationsendgerätes zugeordnet werden soll und sendet daher eine Nachricht 6 an eine nach den Spezifikationen der Parlay-Gruppe betriebene Schnittstelle, die im Folgenden kurz Parlay-Schnittstelle 7 genannt wird. Zwischen dem Dienstevermittlungspunkt 3 und der Parlay-Schnittstelle 7 werden Nachrichten z.B. unter Benutzung eines Intelligent Network Application Protocol (INAP) genannten Kommunikationsprotokolls übertragen. Die Parlay -Schnittstelle 7 verbindet das Telekommunikationsnetz 4 mit Dienstanbieter-Technik 9 eines Dienstanbieters, der unabhängig ist vom Betreiber des Telekommunikationsnetzes 4. Die Parlay-Schnittstelle 7 sendet nun eine Nachricht 11 an eine Rufssteuerungseinheit 12 der Dienstanbieter-Technik 9, welche daraufhin eine weitere Nachricht 15 an einen Rechner 16 des Dienstanbieters sendet. Auch diese Nachricht 15 enthält unter anderem die persönliche Kommunikationsadresse des Kommunikationspartners. Der Rechner 16 erkennt anhand der Nachricht 15, dass eine Telekommunikationsverbindung zu dem Kommunikationspartner mit der in der Nachricht 15 enthaltenen persönlichen Kommunikationsadresse aufgebaut werden soll und liest aus einem Terminspeicher 18 aus, ob für diesen Kommunikationspartner zum aktuellen Zeitpunkt ein Termin vorliegt. An dieser Stelle soll beispielhaft angenommen werden, dass die im Zusammenhang mit Figur 1 genannten Beispieltermine in dem Terminspeicher 18 abgelegt sind und dass die persönliche Kommunikationsadresse des Kommunikationspartners am Donnerstag, dem 13. Mai um 17.30 Uhr angesprochen wird. Dann wird aus dem Terminspeicher 18 ausgelesen, dass für den Kommunikationspartner zu diesem Zeitpunkt ein Termin bei Herrn Schmidt eingetragen ist (Geburtstag). Somit ist bekannt, dass sich der Kommunikationspartner mit einer hohen Wahrscheinlichkeit bei Herrn Schmidt befindet. Also wird aus einem Adressspeicher 20 eine individuelle Kennung eines Kommunikationsendgerätes von Herrn Schmidt ausgelesen (z.B. die Telefonnummer seines Festnetz-telefons 21). Daraufhin wird diese individuelle Kennung mittels einer weiteren Nachricht 22 an die Rufsteuerungseinheit 12 zurückgesandt. Die Rufsteuerungseinheit 12 fordert nun durch Senden einer Nachricht 24 an die Parlay-Schnittstelle 7 diese auf, eine Kommunikationsverbindung zu dem Kommunikationsendgerät mit dieser individuellen Kennung aufzubauen. Die Parlay-Schnittstelle 7 ihrerseits übersetzt diese Aufforderung in eine Nachricht 26 und sendet diese nach dem INAP-Protokoll aufgebaute Nachricht an den Dienstevermittlungspunkt 3. Sowohl die Nachricht 24 als auch die Nachricht 26 enthält die individuelle Kennung des Festnetztelefons 21 von Herrn Schmidt. Nun ist der Dienstevermittlungspunkt 3 durch das Vorliegen der individuellen Kennung des Festnetztelefons 21 in der Lage, eine Kommunikationsverbindung zu diesem Festnetztelefon 21 von Herrn Schmidt aufbauen. Es wird also als Ergebnis des Verfahrens eine Telekommunikationsverbindung hergestellt zwischen dem Kommunikationsendgerät 1 des Kommunikationssuchenden und dem Kommunikationsendgerät 21 von Herrn Schmidt. Das Kommunikationsendgerät 21 von Herrn Schmidt stellt in diesem Falle das Kommunikationsendgerät dar, durch welches der Kommunikationspartner erreichbar ist, da der Kommunikationspartner (hier: Herr Meier) zum aktuellen Zeitpunkt einen Termin bei Herrn Schmidt in seinem Terminspeicher eingetragen hat.

Es soll an dieser Stelle angemerkt werden, dass das beschriebene Ausführungsbeispiel des Verfahrens nur eine Möglichkeit des Verfahrensablaufes und nur eine Möglichkeit der Anordnung beschreibt. Beispielsweise ist im Rechner 16 die Trennung zwischen dem Terminspeicher 18 und dem Adressspeicher 20 nicht unbedingt notwendig. Es können ebenso im Terminspeicher 18 zusammen mit den Terminen des Kommunikationspartners auch die zu diesen Terminen gehörenden individuellen Kennungen der dem jeweiligen Termin zugeordneten Kommunikationsendgeräte abgespeichert werden; ein Adressspeicher ist dann nicht notwendig.

Der Terminspeicher 18 des Rechners 16 wird von einem Termin- kalenderprogramm verwaltet, welches in diesem Beispiel ebenfalls auf dem Rechner 16 vorliegt. Der Kommunikationspartner kann dieses Terminkalenderprogramm über ein Datenverarbeitungsgerät 32 bedienen, welches über eine Verbindung 34 mit dem Rechner 16 verbunden ist. Bei diesem Datenverarbeitungsgerät 32 kann es sich beispielsweise um einen Rechner des Kommunikationspartners (z.B. einen PC oder einen tragbaren Rechner wie einen Laptop oder Palmtop) oder auch um ein Mobilkommunikationsendgerät wie ein Handy handeln. Über dieses Datenverarbeitungsgerät 32 gibt der Kommunikationspartner z.B. seine Termine in den Terminspeicher ein oder aktualisiert diese. Hierbei ist insbesondere anzumerken, dass die im Terminspeicher gespeicherten Termine nicht notwendigerweise nur zur Herstellung von Kommunikationsverbindungen über das Datenverarbeitungsgerät 32 des Kommunikationspartners eingegeben oder aktualisiert werden. Vielmehr kann das Datenverarbeitungsgerät 32 in Verbindung mit dem Rechner 16 ständig auch unabhängig vom Herstellen von Kommunikationsverbindungen vom Kommunikationspartner dazu benutzt werden, seine Termine in einem elektronischen Terminspeicher zu speichern. Dies ist insbesondere in Unternehmen heute oftmals sinnvoll, wo Mitarbeiter ihre Termine mit Hilfe eines Datenverarbeitungsprogramms speichern und diese Termine zentral in einem Terminspeicher abgelegt werden sollen. Gerade diese weitere Nutzungsmöglichkeit für die ständig im Terminspeicher durch die Kommunikationspartner aktualisierten Termine, nämlich die Nutzung der Termine zum Herstellen von Kommunikationsverbindungen, bietet einen wesentlichen Vorteil des erfindungsgemäßen Verfahrens. Da erfahrungsgemäß die meisten Mitarbeiter ihre Terminplanung auf dem neuesten Stand halten (in diesem Fall die Terminplanung mittels Datenverarbeitungsgerät 32 und Terminspeicher 18), entsteht für das Herstellen der Kommunikationsverbindungen zu diesen Mitarbeitern kein zusätzlicher - Administrieraufwand. Darüber hinaus verbessert sich die Erreichbarkeit der Kommunikationspartner, da diese auch bei Vorliegen von in ihrem Terminkalender eingetragenen (z.B. einmaligen) Terminen über ein Kommunikationsendgerät erreicht werden können.
Weiterhin ist vorteilhaft, dass bei Vorliegen von bestimmten Terminarten (wie z.B. Konferenz-Terminen, vgl. Fig. 1) z.B. keine Störungen durch Anrufe über Mobilkommunikationsendgeräte des Kommunikationspartners auftreten, da in diesen Fällen z.B. ein Anrufbeantworter als Ziel des Kommunikationsverbindungsaufbaus genutzt wird.

Es soll wiederum darauf hingewiesen werden, dass das oben genannte Ausführungsbeispiel mit dem Rechner 16, auf dem das Terminkalenderprogramm installiert ist, und dem Datenverarbeitungsgerät 32, mit dem das Terminkalenderprogramm vom Kommunikationspartner bedient werden kann, nur beispielhaft zu verstehen ist. Es ist z.B. ebenso möglich, das Terminkalenderprogramm auf dem Datenverarbeitungsgerät 32 zu installieren und nur die Termine über die Verbindung 34 zum Rechner 16 zu übertragen und im Terminspeicher 18 zu speichern.

## Patentansprüche

1. Verfahren zum Herstellen einer Kommunikationsverbindung zwischen einem Kommunikationssuchenden und einem Kommunikationspartner, dem eine persönliche Kommunikationsadresse zugeordnet ist, bei dem
- zur Kommunikationsaufnahme die persönliche Kommunikationsadresse des Kommunikationspartners angesprochen wird,
- der persönlichen Kommunikationsadresse zeitabhängig eine individuelle Kennung mindestens eines Kommunikationsendgerätes zugeordnet wird und
- eine Kommunikationsverbindung zu dem mindestens einen Kommunikationsendgerät mit der individuellen Kennung aufgebaut wird,
**dadurch gekennzeichnet, dass**
- zum Aufbau der Kommunikationsverbindung aus einem Terminspeicher (18) des Kommunikationspartners die Information ausgelesen wird, welche individuelle Kennung zu diesem Zeitpunkt der persönlichen Kommunikationsadresse des Kommunikationspartners zugeordnet ist und
- eine Kommunikationsverbindung zu dem Kommunikationsendgerät (21) mit dieser individuellen Kennung hergestellt wird.

2. Verfahren nach Anspruch 1,
**dadurch gekennzeichnet, dass**
- bei Nichtvorliegen der Information im Terminspeicher (18) der persönlichen Kommunikationsadresse zeitabhängig die individuelle Kennung des mindestens einen Kommunikationsendgerätes zugeordnet wird.

3. Verfahren nach Anspruch 1 oder 2,
**dadurch gekennzeichnet, dass**
- der persönlichen Kommunikationsadresse zeitabhängig in einer vorgewählten Reihenfolge die individuellen Kennungen mehrerer Kommunikationsendgeräte zugeordnet werden und
- bei einem Fehlschlagen des Herstellens der ersten Kommunikationsverbindung in der Reihenfolge der individuellen Kennungen das Herstellen von Kommunikationsverbindungen zu den Kommunikationsendgeräten mit diesen individuellen Kennungen versucht wird.

4. Verfahren nach einem der Ansprüche 1 bis 3,
**dadurch gekennzeichnet, dass**
- zum Aufbau der Kommunikationsverbindung aus einem Terminspeicher (18) des Kommunikationspartners die Information ausgelesen wird, welcher Termin zu diesem Zeitpunkt für den Kommunikationspartner vorliegt,
- aus einem Adressspeicher (20) des Kommunikationspartners mindestens eine dem Termin zugeordnete individuelle Kennung ausgelesen wird und
- eine Kommunikationsverbindung zu dem Kommunikationsendgerät (21) mit dieser individuellen Kennung hergestellt wird.

5. Verfahren nach einem der Ansprüche 1 bis 4,
**dadurch gekennzeichnet, dass**
- der Terminspeicher (18) von einem Terminkalender-Programm verwaltet wird.

6. Verfahren nach einem der Ansprüche 1 bis 4,
**dadurch gekennzeichnet, dass**
- der Terminspeicher (18) von einem über ein Datenverarbeitungsgerät (32) des Kommunikationspartners bedienbaren Terminkalender-Programm verwaltet wird.

7. Verfahren nach Anspruch 5 oder 6,
**dadurch gekennzeichnet, dass**
- das Terminkalender-Programm auf einem Rechner (16) betrieben wird, der außerhalb eines Kommunikationsnetzes (4) angeordnet ist, durch das der Kommunikationssuchende und der Kommunikationspartner verbindbar sind.

8. Verfahren nach Anspruch 7,
**dadurch gekennzeichnet, dass**
- der Rechner (16) und das Kommunikationsnetz (4) über eine nach den Spezifikationen der Parlay-Gruppe betriebene Schnittstelle (7) verbunden werden.

9. Verfahren nach Anspruch 7 oder 8,
**dadurch gekennzeichnet, dass**
- ein Kommunikationsnetz (4) verwendet wird, das eine Struktur eines Intelligenten Netzes (IN) aufweist.

10. Anordnung zur Durchführung des Verfahrens nach einem der Ansprüche 1 bis 9, die
- einen mit einem Kommunikationsnetz (4) verbindbaren Terminspeicher (18) aufweist, in dem Informationen abgespeichert sind, welche individuellen Kennungen von Kommunikationsendgeräten (21) der persönlichen Kommunikationsadresse des Kommunikationspartners zugeordnet sind.

11. Anordnung nach Anspruch 10,
**dadurch gekennzeichnet, dass**
- in dem Terminspeicher (18) Termine des Kommunikationspartners abgespeichert sind und
- in einem Adressspeicher (20) der Anordnung den Terminen zuordenbare individuelle Kennungen von Kommunikationsendgeräten (21) abgespeichert sind.
